# EUROPEAN PATENT APPLICATION

(11) **EP 2 565 957 A1**
(43) Date of publication of application: **06.03.2013**
(21) Application number: 11774738.6
(22) Date of filing: 25.03.2011
(51) Int. Cl.: H01M 2/10, H01M 2/20, H01M 2/30

(54) **WIRE ROUTING MEMBER AND BATTERY CONNECTOR**

(30) Priority: 27.04.2010 JP 2010101983
(71) Applicant: Yazaki Corporation, Minato-ku Tokyo 108-8333 (JP)
(72) Inventor: OGASAWARA Shigeyuki, Makinohara-shi Shizuoka 421-0407 (JP); SATO Katsunori, Makinohara-shi Shizuoka 421-0407 (JP); YAMASHITA Kiyotaka, Makinohara-shi Shizuoka 421-0407 (JP)
(74) Representative: Grünecker, Kinkeldey, Stockmair & Schwanhäusser
(86) International application number: PCT/JP2011/057297
(87) International publication number: WO 2011/135954

(57) **Abstract**

A wiring member comprises (a) a groove in which an electrical wire is arranged, (b) a lid operable to close an opening of the groove; and (c) a hinge adapted to connect the lid to a side wall of the groove such that the opening of the groove is allowed to be opened and closed by the lid. The side wall comprises a hinge-forming portion where the hinge is provided, and a projecting portion continuing to the hinge-forming portion, provided adjacent the hinge and protruding either inward or outward of the groove with reference to the hinge-forming portion. The projecting portion prevents the hinge-forming portion from being inclined when the opening of the groove is closed by the lid.

## Description

### Technical Field

The present invention relates to a wiring member that comprises a groove for arrangement of an electrical wire therein, a lid adapted to close an opening of the groove, and a hinge connecting the lid to a side wall of the groove for opening and closing of the groove's opening with the lid. The present invention also relates to a battery connection unit incorporating this wiring member.

### Background Art

As an example, electric automobiles that run on an electric motor or hybrid automobiles that run on an internal combustion engine and an electric motor incorporate a power supply unit to power the electric motor. The power supply unit employs a battery connection plate described in the patent literature PTL1.

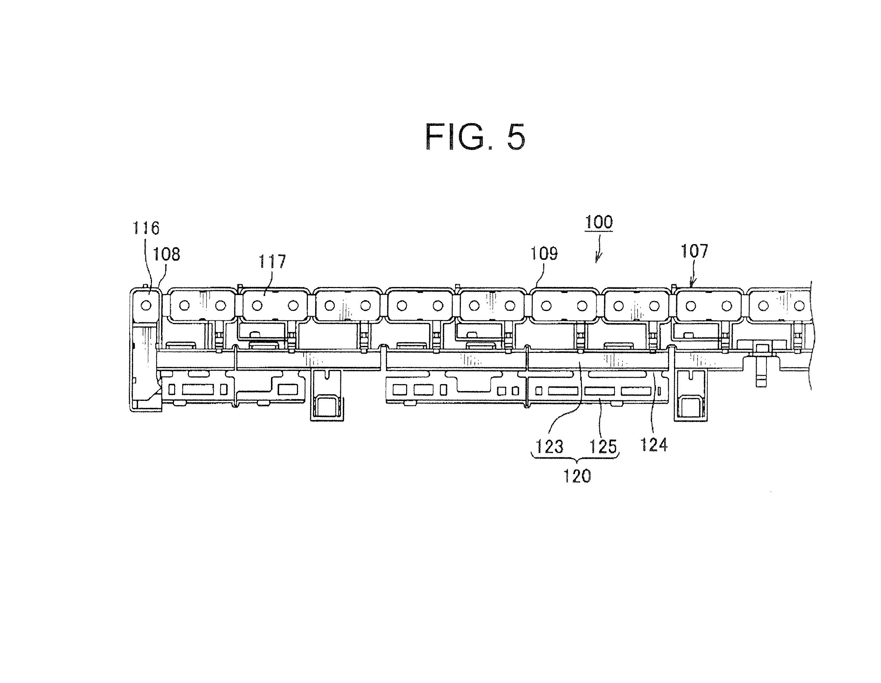

Referring to FIG. 5, the battery connection plate 100 is connected to a battery assembly comprising batteries (rectangular battery cells) each having a positive electrode at one end and a negative electrode at the other end, the battery cells being aligned with the positive and negative electrodes alternately inversely arranged.

The battery connection plate is adapted to connect the aligned battery cells in series with each other. The battery connection plate 100 comprises a resin plate 107 obtained by a forming die, a busbar 116 adapted to be fitted in one end 108 of the resin plate 107, the busbar 116 including one hole therein, and a busbar 117 adapted to be fitted in the resin plate 107 adjacent one side 109 thereof, the busbar 117 including two holes therein.

The battery connection plate 100 is placed in a ready state to be mounted to the battery assembly when a power line is arranged in the battery connection plate 100 and signal lines are arranged in a protecting part 120. At this point, a terminal at the end of the power line is provided such that it is brought into contact with the busbar 116 having the one hole. Likewise, terminals at the ends of the signal lines are provided such that they are brought into contact with the busbar 117 having the two holes.

The battery connection plate 100 includes the protecting part 120 adapted to protect the arranged signal lines. The protecting part 120 includes a plurality of wiring grooves 123 for arrangement of the signal lines, and a plurality of groove covers 125 adapted to be brought into engagement with the corresponding one of the wiring grooves 123 via a hinge 124.

After the signal lines are arranged in the wiring grooves 123, the hinge 124 is pressed and bent, the groove cover 125 is pushed down to the wiring groove 123, the wiring groove 123 and the groove cover 125 are brought into fitting engagement with each other, and thus the protecting part 120 is ready to be in service.

### Citation List

### Patent Literature

PTL 1: Japanese patent Application Laid-Open Publication No.

### Summary of Invention

### Technical Problem

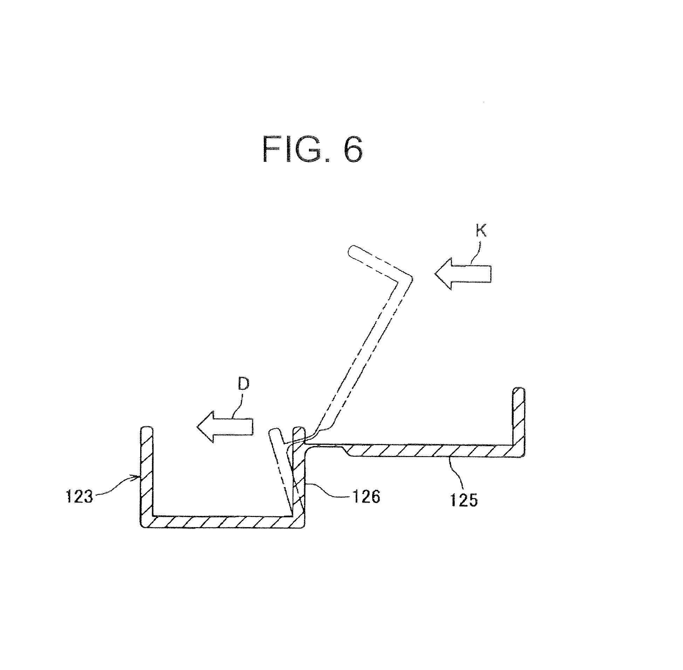

Notwithstanding, and referring to FIG. 6, there is a drawback in the case of the protecting part 120 of the above-described battery connection plate 100. When the groove cover 125 is to be brought into fitting engagement in a fitting direction K, the side wall 126 of the wiring groove 123 where the hinge 124 is provided becomes inclined in an inclining direction D, making it difficult to bring the wiring groove 123 and the groove cover 124 into fitting engagement with each other. This drawback decreases workability in fitting operation and leads to increase in costs incurred during mounting of the battery connection plate 100.

Another option is to increase the thickness of the side wall 126 of the wiring groove 123 to increase the strength thereof, but this option also increases the weight of the battery connection plate 100, causing further cost increases.

In view of the above drawbacks, an object of the present invention is to provide a wiring member and a battery connection unit incorporating the same that has simple structure for preventing inclination of the groove's sidewall when the groove is closed by the lid via the hinge.

### Solution to Problem

In order to attain the above-described objectives, a first aspect of the present invention provides a wiring member that comprises (a) a groove in which an electrical wire is arranged; (b) a lid operable to close an opening of the groove; and (c) a hinge adapted to connect the lid to a side wall of the groove such that the opening of the groove is allowed to be opened and closed by the lid.

The side wall comprises a hinge-forming portion where the hinge is provided, and a projecting portion continuing to the hinge-forming portion, provided adjacent the hinge and protruding either inward or outward of the groove with reference to the hinge-forming portion. The projecting portion prevents the hinge-forming portion from being inclined when the opening of the groove is closed by the lid.

According to the wiring member of the first aspect of the present invention, when a force acts upon the lid in a direction in which the opening of the groove is closed by the lid, a force is generated in the hinge-forming portion inward of the groove. Further, by virtue of this force, inclination of the hinge-forming portion inward or outward of the groove can be prevented by the projecting portion continuing to the hinge-forming portion and provided adjacent the hinge.

In a second aspect of the present invention, the wiring member in the context of the first aspect is further characterised by the fact that the projecting portion protrudes outward of the groove with reference to the hinge-forming portion.

According to the wiring member of the second aspect of the present invention, when the hinge-forming portion tends to be inclined inward or outward of the groove, the inclination can be prevented by the projecting portion protruding outward of the groove.

In a third aspect of the present invention, the wiring member in the context of the first or second aspect is further characterised by the fact that the side wall includes a pair of the projecting portions such that the hinge-forming portion is between the pair of the projecting portions.

According to the wiring member of the third aspect of the present invention, even when a large force acts upon the hinge-forming portion, inclination of the hinge-forming portion can be effectively prevented by virtue of the projecting portions at both sides of the hinge-forming portion.

In order to attain the above-described objectives, according to a fourth aspect of the present invention, there is provided a battery connection unit adapted to be attached to a plurality of battery cells aligned with positive electrodes and negative electrodes arranged alternately and inversely and adapted to connect the battery cells in series with each other. The battery connection unit comprises the wiring member according to any one of the first to third aspects, wherein an electrical wire electrically connected to the battery cells is arranged in the groove.

According to the battery connection unit of the fourth aspect of the present invention, when the electrical wire electrically connected to the battery cells is arranged in the groove of the wiring member, the lid of the wiring member is acted upon by a force in a direction in which the lid closes the opening of the groove, so that the electrical wire is accommodated in the wiring member with the opening of the groove closed by the lid. In this operation, even when the hinge-forming portion is acted upon by an unexpected force causing inward or outward inclination, inclination of the hinge-forming portion can be prevented by virtue of the projecting portion continuing to the hinge-forming portion and provided adjacent the hinge.

### Advantageous Effects of Invention

With the construction and arrangement of the invention according to the first aspect, the projecting portion is provided protruding inward or outward of the groove with respect to the hinge-forming portion and continuing to the hinge-forming portion and provided adjacent the hinge, and the projecting portion prevents inclination of the hinge-forming portion when the opening of the groove is closed by the lid, so that the conventional drawback is solved that it is difficult to bring the groove and the lid into fitting engagement via the hinge, and thus further decrease in the workability in the fitting operation can be prevented. Accordingly, it is made possible to further improve the workability in the fitting operation, thereby contributing to reduction of assembling costs. Also, the strength of the groove is improved simply by virtue of the projecting portion provided at a side wall of the groove adjacent the hinge, which allows prevention of large increase in weight of the groove.

With the construction and arrangement of the invention of the second aspect, in addition to the effects according to the first aspect, since the projecting portion protrude outward of the groove, it is made possible to increase the strength of the groove without reducing the accommodation space for the electrical wire in the groove.

With the construction and arrangement of the invention of the third aspect, in addition to the effects realized by the first and second aspects, since the projecting portions are provided at both sides of the hinge-forming portion, it is made possible to further increase the strength of the hinge-forming portion, and thus inclination of the hinge-forming portion is prevented when the projecting portion closes the opening of the groove by the lid.

With the construction and arrangement of the present invention of the fourth aspect as has been described in the foregoing, since the electrical wire electrically connected to the battery cells is arranged in the wiring member of the present invention, the projecting portion allows prevention of inclination of the hinge-forming portion when the opening of the groove is closed by the lid, so that the conventional drawback is solved that it is difficult to bring the groove and the lid into fitting engagement via the hinge, and thus further decrease in the workability in the fitting operation can be prevented. Accordingly, it enables further improvement of the workability in the fitting operation, thereby contributing to reduction of assembling costs.

### Brief Description of Drawings

FIG. 1 is a perspective view of a groove of a wiring member in an open state;
FIG. 2 is an exploded view of a power supply unit comprising a battery connection unit having a wiring member and a battery cell assembly to which the battery connection unit is attached;
FIG. 3 is a partly enlarged top view of a part of the battery connection unit having the wiring member;
FIG. 4 is a cross-sectional view in an arrow direction taken along the line A-A in FIG. 3;
FIG. 5 is a top view of an exemplary conventional battery connection plate; and
FIG. 6 is a cross-sectional view for illustration of a problem in a conventional battery connection plate.

### Description of Exemplary Embodiment

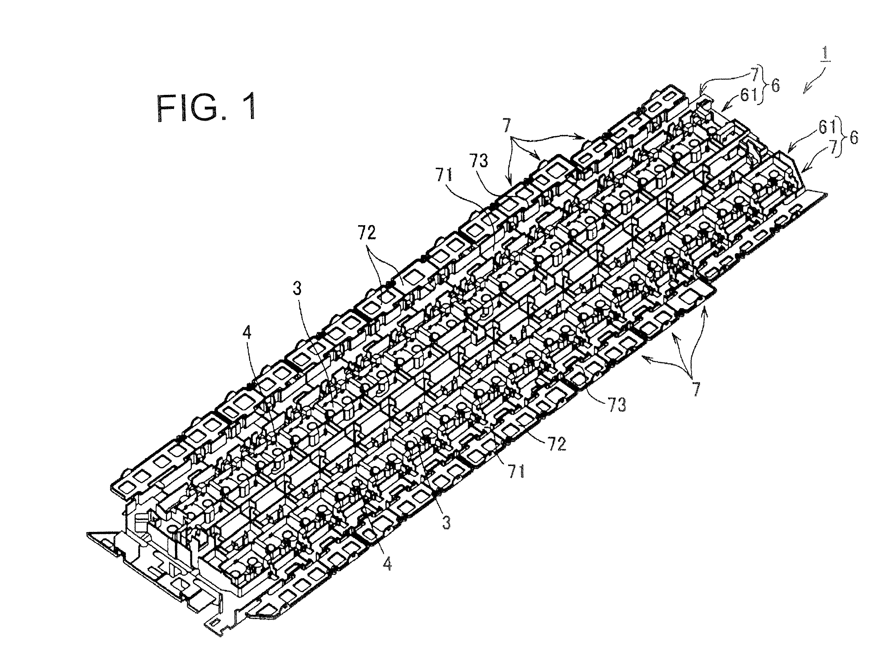

A wiring member and a battery connection unit incorporating the same according to one embodiment of the present invention are described below with reference to FIGS. 1 to 4.

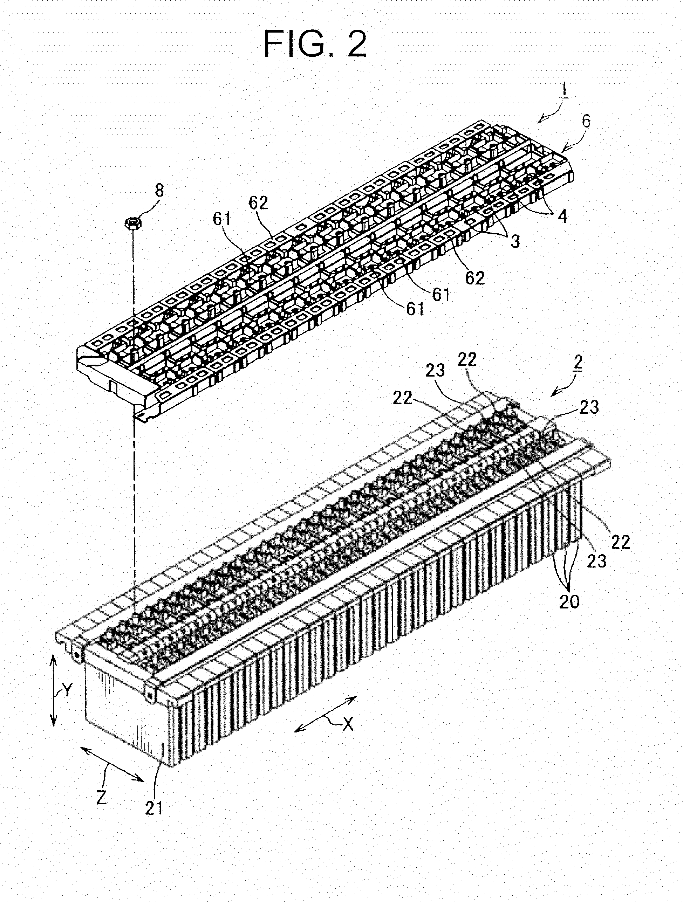

Referring to FIGS. 1 and 2, a battery connection unit 1 of the present invention is attached to a battery cell assembly 2, these two elements constituting a power supply unit. The power supply unit may be incorporated in electric automobiles that run on an electric motor or hybrid automobiles that run on an internal combustion engine and an electric motor to supply electrical power to the electric motor. It should be noted that the battery cell assembly comprises battery cells (rectangular battery cells) each having a positive electrode at one end and a negative electrode at the other end thereof, the battery cells being aligned with the positive and negative electrodes alternately inversely arranged.

Referring to FIG. 2, a battery cell assembly 2 comprises a plurality of battery cells 20 and a securing member (not shown) adapted to align the battery cells 20 side by side with each other and secure them to each other. The battery cells 20 each comprise a cube-shaped battery cell body 21, a positive electrode 22 projecting at one end of a top surface of the body 21 and a negative electrode 23 projecting at the other end of the same top surface of the body 21.

The battery cells 20 are aligned side by side with each other such that the positive electrodes 22 and the negative electrodes 23 are alternately arranged in a linear fashion in an alignment direction in which the battery cells 20 are arranged. An arrow X in FIG. 2 indicates the alignment direction in which the battery cells 20 are arranged, the same arrow X also indicates a length direction of the battery cell assembly 2. An arrow Z indicates a width direction of each of the battery cells 20, and accordingly a width direction of the battery cell assembly 2. An arrow Y indicates a height direction of each of the battery cells 20, and accordingly a height direction of the battery cell assembly 2.

The battery cell assembly 2 is mounted in an automobile with its height direction (the direction indicated by the arrow Y) parallel to the direction of gravitational force. Specifically, in a state where the battery cell assembly 2 is mounted in the automobile, the upper side with reference to the arrow Y in FIG. 2 corresponds to the upper side in the direction of gravitational force, and the lower side with reference to the direction indicated by the arrow Y corresponds to the lower side in the direction of gravitational force. Also, in the state where the battery cell assembly 2 is mounted in the automobile, the positive electrodes 22 and the negative electrodes 23 project on the top surface of the battery cell bodies 21 of the battery cells 20 in the direction indicated by the arrow Y.

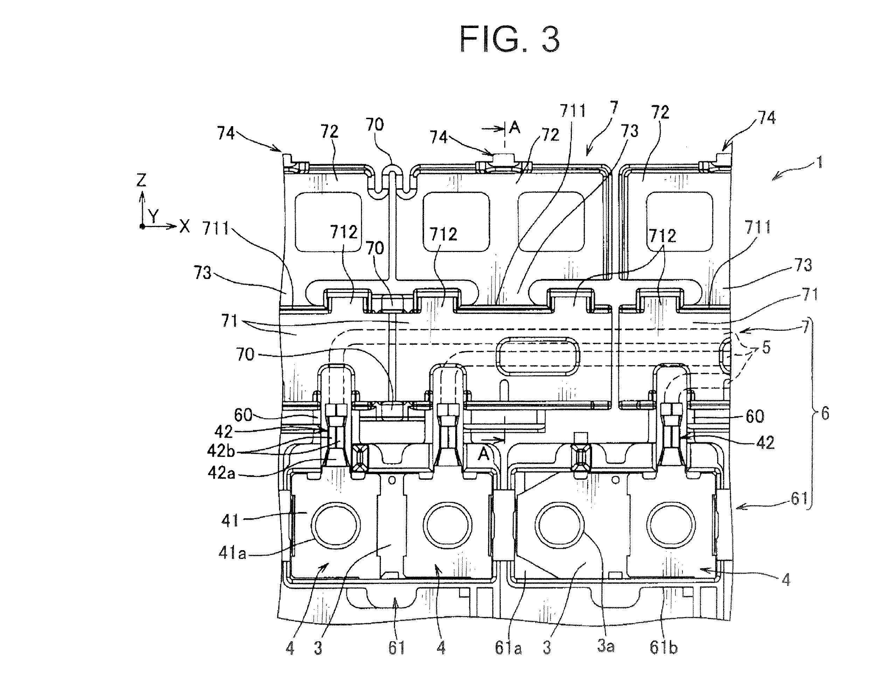

Referring next to FIG. 3, the battery connection unit 1 comprises a plurality of busbars 3, a plurality of terminals 4 each disposed in an overlapping manner on corresponding one of the busbars 3 to be connected to the busbar 3, a plurality of electrical wires 5 each connected to corresponding one of the terminals 4, and a battery cell connecting plate 6 (which may hereafter be simply called "the plate") made of synthetic resin and adapted to cover these elements.

The busbar 3 may be obtained by press working of a metal plate. The busbar 3 comprises, as shown in FIG. 3, a plate-shaped metal plate having a pair of busbar holes 3a through which the positive electrode 22 and the negative electrode 23 of the battery cell 20 are passed, respectively. The busbar 3 is configured such that the positive electrode 22 of adjacent one of the battery cells 20 is inserted into one of the pair of busbar holes 3a, and the negative electrode 23 of adjacent another of the battery cells 20 is inserted into the other of the pair of busbar holes 3a. In this manner, the busbar 3 is connected to the positive electrode 22 and the negative electrode 23 to be electrically connected to the positive electrode 22 and the negative electrode 23.

The busbar 3 is secured to the battery cell 20 by means of nuts 8 (see FIG. 2) each screwed onto the positive electrode 22 and the negative electrode 23 passed through the busbar holes 3a.

The terminal 4 may be obtained by press working of a metal plate. As shown in FIG. 3, the terminal 4 includes in one piece therewith a busbar connecting portion 41 and a wire connecting portion 42.

The busbar connecting portion 41 has a platy shape. The busbar connecting portion 41 includes a terminal hole 41 a through which either of the positive electrode 22 and the negative electrode 23 is passed. The busbar connecting portion 41 is disposed in an overlapping manner on the busbar 3 in a state where either of the positive electrode 22 and the negative electrode 23 is passed through the terminal hole 41 a, so that the busbar connecting portion 41 is electrically connected to the busbar 3.

The wire connecting portion 42 includes a bottom plate 42a and a pair of swaging pieces 42b. The bottom plate 42a continues to the busbar connecting portion 41 and is adapted to position the electrical wire 5 on a surface of the bottom plate 42a. The pair of swaging pieces 42b each protrude from both ends of the bottom plate 42a in the width direction and are adapted to swage insulating sheath of the end of the electrical wire 5 so as to secure the electrical wire 5 for electrical connection thereto. The wire connecting portion 42 extends from the busbar connecting portion in a direction substantially orthogonal to the length direction (the direction indicated by the arrow X) of the groove 71 of the plate 6.

The electrical wire 5 comprises a conductive core wire and a sheath portion made of insulating material and covering the core wire. One end of the electrical wire 5 is connected to the wire connecting portion 42 of the terminal 4 accommodated in the accommodating portion 61. The electrical wire 5 is arranged in the groove 71 of the plate 6. The other end of the electrical wire 5 is connected to a not-shown component such as a voltage detecting circuit.

The plate 6 has a substantially rectangular shape substantially identical with the top surface of the battery cell assembly 2 such that the plate 6 is disposed in an overlapping manner on the top surface of the battery cell assembly 2. The plate 6 is configured to accommodate the busbars 3 and the terminals 4 disposed on the busbar 3, and includes a plurality of accommodating portions 61 arranged spaced from each other in the direction indicated by the arrow X; and wiring member 7 that extends in the arrangement direction of the accommodating portions 61 and extends in parallel to the accommodating portions 61 in the direction indicated by the arrow Z, and is adapted to accommodate the electrical wires 5 connected to the terminals 4. The accommodating portions 61 and the wiring members 7 are connected to each other via the connecting member 60 to form a single assembly.

Also, the illustrated plate 6 includes the accommodating portions 61 and the wiring members 7 arranged spaced from each other in the direction indicated by the arrow X, each provided in two rows in a direction indicated by the arrow Z. Other embodiments may be contemplated where, for example, only one row thereof may be provided.

As shown in FIG. 3, the accommodating portions 61 takes a shape of a box defined by a bottom wall 61 a on a surface of which each busbar 3 is positioned, and a side wall 61b upstanding at an edge of the bottom wall 61a such that each busbar 3 is brought into fitting engagement therewith. The principal parts 61 are each configured to accommodate therein the busbar 3 and the terminal 4 disposed in the overlapping manner on the busbar 3. The bottom wall 61a includes the pair of plate holes into which the positive electrode 12 and the negative electrode 13 of the battery cell 20 can each be inserted. Also, the accommodating portions 61 are arranged spaced from each other in the alignment direction in which the battery cells 20 are arranged (i.e., the direction indicated by the arrow X). This arrangement enables absorption of positional misalignment with respect to the positive electrode 12 and the negative electrode 13 of the battery cell 20.

The wiring members 7 are, as shown in FIGS. 1 and 2, arranged juxtaposed to each other in the arrangement direction in which the accommodating portions 61 are arranged (i.e., the direction indicated by the arrow X). The wiring members 7 are, in a manner similar to that of the accommodating portions 61, arranged spaced from each other, and any pair of adjacent wiring members 7 are connected to each other via the connecting hinge 70. This connection enables absorption of the positional misalignment with respect to the positive electrode 12 and the negative electrode 13 of the battery cell 20.

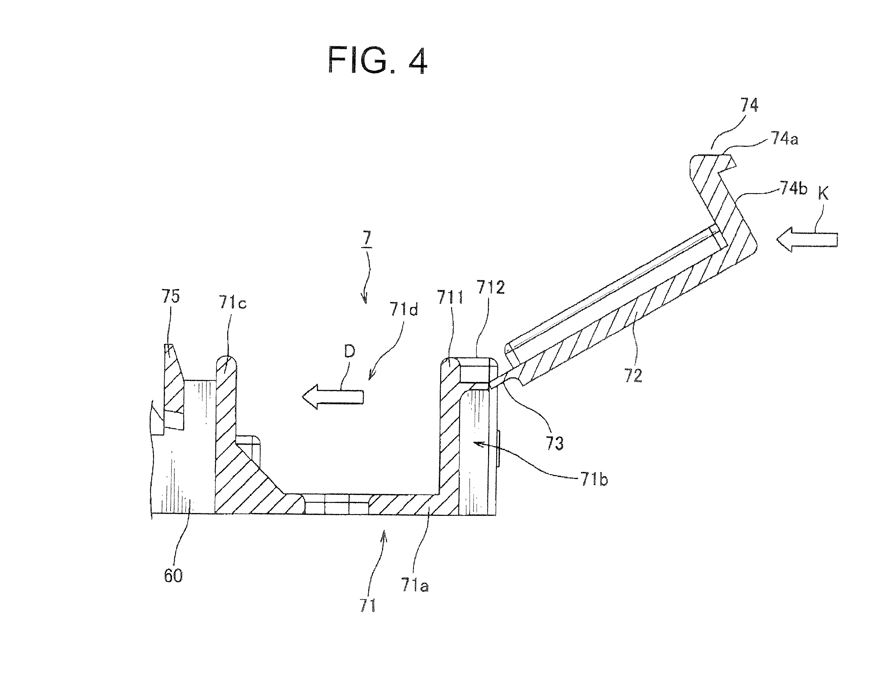

As shown in FIG. 3, 4 the wiring member 7 comprises in one piece therewith a groove 71, a lid 72, a hinge 73, a fitting portion 74, and a fitting-receiving portion 75.

The electrical wire 5 is arranged in the groove 71, the electrical wire 5 being electrically connected to the terminal 4 accommodated in the plate 6. The groove 71 includes a bottom wall 71 a extending in the arrangement direction of the accommodating portion 61, and a pair of side walls 71b, 71c upstanding from opposed ends of the bottom wall 71a. The cross section of the groove 71 taken in its width direction, i.e., the direction indicated by the arrow Z is in a shape of a U-shaped gutter. Also, the space between the pair of side walls 71b, 71c comprises an opening 71d for introducing the electrical wire 5 in the groove 71. Also, the pair of adjacent grooves 71 constitute a continuous groove in which the electrical wire 5 is arranged.

The lid 72 takes such a shape that the opening 71d of the groove 71 is closed. Also, the hinge 73 connects the lid 72 to the one of the side wall 71b of the groove 71. The hinge 73 connects the lid 72 to the groove 71 such that the lid 72 is operable to be opened and closed with respect to the opening 71d of the groove 71. Also, in the hinge 73 of this embodiment, the groove 71 or the lid 72 is operable to be rotatably moved between an open state where the opening 71 d of the groove 71 is open and a closed state where the opening 71d is closed by the lid 72. In this embodiment, when a force acts in the fitting direction F of FIG. 4, rotatable movement of the lid 72 about the hinge 73 is induced.

The fitting portion 74 upstands from an end of the lid 72 when the lid 72 is positioned in the closed state, upper portion of the other one of the side walls 71c of the groove 71 is covered. The fitting portion 74 includes an arm 74a and a fitting projecting portion 74b provided adjacent a tip of the arm 74a and protruding outward of the groove 71.

The fitting-receiving portion 75 is, as shown in FIGS. 3 and 4, provided along and adjacent the upper portion of the side wall 71c of the groove 71. The fitting-receiving portion 75 includes a gap between it and the side wall 71 c such that the fitting portion 74 can be inserted into the gap. Also, the fitting projecting portion 74b of the fitting portion 74 is passed through the gap and brought into fitting engagement with the lower end of the fitting-receiving portion 75, so that the closed state is maintained in which the lid 72 closes the opening 71d of the groove 71.

Also, as shown in FIGS. 3 and 4, the one side wall 71b of the groove where the hinge 73 is provided includes a hinge-forming portion 711 and a pair of projecting portions 712. The hinge-forming portion 711 is a portion extending from the end of the side wall 71b where the hinge 73 is provided to the bottom wall 71 a and has a shape corresponding to the width of the hinge 73.

The projecting portion 712 continues to the hinge-forming portion 711 and is provided adjacent the hinge 7. The projecting portion 712 protrudes away from the hinge-forming portion 711 and outward of the groove 71. The projecting portion 712 has the same thickness as that of the hinge-forming portion 711 and has a U-shaped cross section in the direction indicated by the arrow X. It should be noted that the size and dimensions of the projecting portion 712 may be defined in accordance with the hinge-forming portion 711, i.e., depending on the strength of the side wall 71b.

Also, in this embodiment, a pair of the projecting portions 712 are each provided at the side walls 71b on both sides of the hinge-forming portion 711. This configuration enables further improvement of the strength of the hinge-forming portion 711. Accordingly, inclination of the hinge-forming portion 711 can be effectively prevented when the projecting portion 712 closes the opening 71d of the groove 71 by the lid 72. Also, the strength of the groove 71 is improved simply by providing the projecting portion 712 on the side wall 71d of the groove 71 adjacent the hinge 73, which allows avoidance of large increase in the weight of the groove 71. It should be noted that, depending on the strength of the hinge-forming portion 711, the projecting portion 712 may only be provided on one side of the hinge-forming portion 711.

Next, the following describes exemplary assembling operation for configuring the power supply unit with the battery connection unit 1 having the above-described configuration attached to the terminal surface of the battery cell assembly 2 (top surface in FIG. 2).

Referring to FIG. 2, the battery connection unit 1 is disposed on the terminal surface of the battery cell assembly 2, and the nuts 8 are screwed onto the positive electrode 22 and the negative electrode 23 passed through the holes of the plate 6, the busbar 3, and the terminal 4 in this order, and thus attached to the battery cell assembly 2. Further, as shown in FIG. 4, when the electrical wires 5 are electrically connected to the terminals 4 each accommodated in the accommodating portions 61 of the plate 6, then the electrical wire 5 is bent along the accommodating portion 61 and inserted via the opening 71d of the wiring members 7 into the groove 71, and thus the electrical wires 5 are arranged in the groove 71.

When the arrangement of the electrical wire 5 is complete, as shown in FIG. 4, a force in fitting direction K by an operator acts upon the lid 72 of the wiring member 7, and the lid 72 moves about the hinge 73 toward the opening 71d of the groove 71. At this point, a force is generated that acts upon the hinge-forming portion 711 toward the inside of the groove 71 and acts in the inclining direction D of the side wall 71b, and accordingly the hinge-forming portion 711 tends to be inclined in the inclining direction D, but the inclination of the hinge-forming portion 711 is prevented by virtue of the pair of projecting portion 712 at the both sides. Thus, it is made possible to bring the fitting portion 74 and the fitting-receiving portion 75 smoothly into fitting engagement with each other. Further, when the fitting portion 74 and the fitting-receiving portion 75 are placed in fitting engagement, the groove 71 is placed in the closed state, i.e., the state where the groove 71 is closed by the lid 72. This operation is performed for all of the wiring members 7, and then the assembling operation is completed.

With the construction and arrangement of the above-described battery connection unit 1, the electrical wire 5 electrically connected to the battery cells 20 is arranged within the wiring member 7 of the present invention, so that it is possible to reliably prevent the hinge-forming portion 711 from inclining by the projecting portion 712 when the opening 71d of the groove 71 is closed by the lid 72, and accordingly the conventional problem is solved that it is difficult to bring the groove 71 and the lid 72 into fitting engagement with each other via the hinge 73, and it is made possible to prevent decrease in workability in the fitting operation. Accordingly, workability in the fitting operation can be improved, thereby contributing to reduction of assembling costs.

Also, the projecting portion 712 of the above wiring member 7 protrudes outward of the groove 71, and accordingly it is made possible to increase the strength of the groove 71 without reducing the accommodation space for the electrical wire in the groove 71. However, the projecting portion 712 may protrude inward of the groove 71.

Further, according to the above-described wiring member 7, the projecting portion 712 are provided at the both sides of the hinge-forming portion 711, so that it is made possible to further increase the strength of the hinge-forming portion 711. As a result, it is possible to reliably prevent the hinge-forming portion 711 from being inclined as the projecting portion 712 closes the opening 71d of the groove 71 by the lid 72.

It should be noted that the wiring member 7 with the above-described configuration may be used as a single wiring member for receiving therein the electrical wire 5 to protect it.

It should be noted that the embodiment has only been illustrated as a typical one of the present invention, and the present invention is in no way limited to the illustrated embodiment. Hence, the present invention can be effectuated with various modifications made thereto within the scope of the present invention.

### Reference Signs

- 1: Battery connection unit
- 2: Battery cell assembly
- 3: Busbar
- 4: Terminal
- 5: Electrical wire
- 6: Battery cell connecting plate (plate)
- 7: Wiring member
- 71: Groove
- 72: Lid
- 73: Hinge
- 711: Hinge forming portion
- 712: Projecting portion

## Claims

1. A wiring member comprising:
(a) a groove in which an electrical wire is arranged,
(b) a lid operable to close an opening of the groove; and
(c) a hinge adapted to connect the lid to a side wall of the groove such that the opening of the groove is allowed to be opened and closed by the lid, said side wall comprising a hinge-forming portion where the hinge is provided, and a projecting portion continuing to the hinge-forming portion, provided adjacent the hinge and protruding either inward or outward of the groove with reference to the hinge-forming portion such that the projecting portion prevents the hinge-forming portion from being inclined when the opening of the groove is closed by the lid.

2. The wiring member as set forth in claim 1, wherein the projecting portion protrudes outward of the groove with reference to the hinge-forming portion.

3. The wiring member as set forth in claim 1 or 2, wherein the side wall includes a pair of the projecting portions such that the hinge-forming portion is between the pair of the projecting portions.

4. A battery connection unit adapted to be attached to a plurality of battery cells aligned with positive electrodes and negative electrodes arranged alternately and inversely and adapted to connect the battery cells in series with each other, the battery connection unit comprising the wiring member according to any one of claims 1 to 3, wherein an electrical wire electrically connected to the battery cells is arranged in the groove.
